# FASCICULE DE BREVET EUROPEEN

(11) **EP 1 834 202 B1**
(45) Date de publication et mention de la délivrance du brevet: **09.03.2011**
(21) Numéro de dépôt: 06709028.2
(22) Date de dépôt: 03.01.2006
(51) Int. Cl.: G02B 26/00, G02B 6/34

(54) **FILTRE OPTOELECTRONIQUE SELECTIF ACCORDABLE EN LONGUEUR D'ONDE**
WELLENLÄNGENABSTIMMBARES SELEKTIVES OPTOELEKTRONISCHES FILTER
WAVELENGTH-TUNABLE SELECTIVE OPTOELECTRONIC FILTER

(30) Priorité: 07.01.2005 FR 0500189
(43) Date de publication de la demande: 19.09.2007
(73) Titulaire: CENTRE NATIONAL DE LA RECHERCHE SCIENTIFIQUE, 75794 Paris Cedex 16 (FR)
(72) Inventeur: GARRIGUES, Michel, F-69890 La Tour de Salvagny (FR); LECLERCQ, Jean-Louis, F-69480 Morance (FR)
(74) Mandataire: Ramey, Daniel
(86) Numéro de dépôt international: PCT/FR2006/000006
(87) Numéro de publication internationale: WO 2006/072734

(56) Documents cités:
- US-A- 5 212 745
- US-A- 5 739 945

## Description

L'invention concerne un filtre optoélectronique sélectif et accordable en longueur d'onde, notamment applicable au démultiplexage en longueur d'onde des différents canaux d'un système de télécommunication optique du type WDM (Wavelength Division Multiplexing) ou DWDM (Dense Wavelength Division Multiplexing).

On connaît des filtres sélectifs et accordables en longueur d'onde qui sont constitués par des composants MOEMS (Micro - Opto - Electro - Mechanical Systems) réalisables par des procédés classiques de microtechnologie et accordables par déformation mécanique des matériaux de ces composants. Ces filtres sont du type Fabry-Perot et comprennent une cavité résonnante formée par une lame d'air placée entre deux réflecteurs partiels parallèles tels que des miroirs de Bragg. L'accordabilité de la longueur d'onde de résonance est obtenue par déplacement d'au moins un des réflecteurs, monté de manière élastiquement déformable, au moyen d'une pression électrostatique produite par application d'une tension électrique de commande entre les deux réflecteurs partiels. Ce déplacement se traduit par une variation de l'épaisseur de la cavité résonnante et donc par une variation de la longueur d'onde centrale du filtre.

Quand les réflecteurs délimitant la cavité résonnante sont plans et de faibles dimensions latérales, il n'est pas possible d'obtenir une sélectivité spectrale meilleure que 0,5 nm alors qu'il faut viser une valeur inférieure ou égale à 0,2 nm pour le démultiplexage de signaux de type DWDM.

Cette limitation est due au fait que dans une cavité plane, la divergence naturelle d'un faisceau lumineux limite le nombre d'allers-retours que ce faisceau peut effectuer entre les réflecteurs sans s'échapper latéralement de la cavité. Il s'agit d'un phénomène appelé « instabilité de la cavité ».

Un moyen connu d'améliorer cette sélectivité est d'imposer une courbure initiale positive convenable à l'un des réflecteurs partiels pour refocaliser l'onde électromagnétique à chaque aller-retour et ainsi augmenter le nombre d'allers-retours que l'onde électromagnétique peut faire dans la cavité résonnante sans atténuation appréciable. Cette technique est décrite dans le document US-A-6.645.784 de Tayebati et al., mais est de réalisation très complexe et coûteuse.

Le document US-A-5,739,945 décrit des filtres du type Fabry-Pérot comprenant une cavité résonante d'air placée entre deux réflecteurs partiels constitués d'un empilement de couches de matériaux semi-conducteurs.

Le document US-A-5,212,745 décrit un filtre du type Fabry-Pérot dans lequel la cavité résonante comprend un tronçon de fibre optique monomode formant un guide d'onde, placé entre deux fibres optiques, des réflecteurs étant formés aux extrémités de ces fibres optiques ou du tronçon intermédiaire de fibre optique.

La présente invention a notamment pour but d'apporter une solution simple, efficace et économique au problème de l'amélioration de la sélectivité spectrale des filtres du type précité.

Elle propose à cet effet un filtre optoélectronique sélectif arccordable en longueur d'onde comprenant les caractéristiques de la revendication 1.

Le guide d'onde formé par le disque de matériau solide transparent à indice de réfraction élevé qui constitue la cavité résonnante confine latéralement l'onde électromagnétique qui effectue des allers-retours entre les réflecteurs partiels et évite les pertes latérales par les bords de la cavité résonnante. Cette réduction des pertes se traduit par une amélioration notable de la sélectivité spectrale du filtre.

Par ailleurs, la variation d'épaisseur de la lame d'air adjacente au disque, qui résulte du déplacement de la partie mobile ou déformable précitée, permet d'accorder le filtre en longueur d'onde, du fait que l'épaisseur effective de la cavité résonnante formée par le disque précité est supérieure à l'épaisseur de ce disque, en raison de la pénétration partielle de l'onde réfléchie dans le réflecteur.

Avantageusement, le disque de matériau à indice de réfraction élevé qui constitue la cavité résonnante a un diamètre faible qui est typiquement de l'ordre de 10 µm, pour assurer autant que possible une propagation quasi-monomode de l'onde résonnante.

Le premier et le second réflecteurs partiels sont typiquement formés d'un empilement de couches de matériaux transparents aux longueurs d'onde utilisées, l'une de ces couches ou un groupe de ces couches étant, dans l'un des réflecteurs ou dans chaque réflecteur, mobile ou déformable et séparé par une lame d'air du disque de la cavité résonnante.

De plus, le premier réflecteur formé d'une alternance de couches de matériau semi-conducteur et de couches d'air comprend une lame mobile ou déformable semi-conductrice ayant un dopage de type p (ou n, respectivement) qui est opposé à celui des autres couches de matériau semi-conducteur de ce premier réflecteur.

Le disque formant la cavité résonnante est également en matériau semi-conducteur ayant un dopage du type opposé à celui de la lame mobile du réflecteur.

Avantageusement, le second réflecteur partiel comprend lui aussi un empilement de couches de matériaux semi-conducteurs transparents aux longueurs d'onde utilisées, une des couches de matériau semi-conducteur ou un groupe de ces couches formant une lame mobile ou déformable séparée par une couche d'air du disque formant la cavité résonnante, le dopage de cette lame mobile ou déformable étant du type opposé à celui des autres couches de matériau semi-conducteur du second réflecteur partiel.

Dans ce cas, les dopages des deux lames mobiles ou déformables précitées sont du même type.

Dans un mode de réalisation particulier de l'invention, la ou chaque lame mobile ou déformable précitée est une lame suspendue reliée par des bras élastiquement déformables de dimension appropriée à un support périphérique fixe.

De préférence, toute les couches de matériau semi-conducteur des réflecteurs partiels précités et le disque formant la cavité résonnante sont du type suspendu et sont reliés par des bras rigides ou élastiquement déformables selon les cas à un support périphérique fixe.

Les moyens d'accord du filtre en longueur d'onde comprennent, dans une première réalisation, deux électrodes reliées à des couches fixes de matériau semi-conducteur des réflecteurs partiels situées de part et d'autre du disque formant la cavité résonnante et de la lame mobile, et des moyens d'application d'une tension électrique de commande entre ces électrodes. Les dopages respectifs des couches de matériau semi-conducteur des réflecteurs, de la lame mobile et de la cavité résonnante réalisent une structure de deux diodes montées tête-bêche et l'on peut ainsi déformer la lame mobile soit en direction de la partie fixe du réflecteur dont elle fait partie, soit en direction de la cavité résonnante suivant la polarité de la tension appliquée. On réalise ainsi un actionnement bi-directionnel qui permet d'augmenter ou de diminuer la longueur d'onde de résonance à partir de sa valeur initiale.

Lorsque l'autre réflecteur partiel du filtre selon l'invention comprend aussi une lame mobile ou déformable, les moyens d'accord en longueur d'onde comprennent trois électrodes reliées au disque précité et à deux couches fixes de matériau semi-conducteur des réflecteurs situées de part et d'autre du disque et des lames mobiles, respectivement, et des moyens d'application de tensions électriques identiques entre l'électrode reliée au disque et celles reliées aux couches fixes précitées.

Dans ce cas, on peut déformer simultanément les deux lames mobiles situées de part et d'autre de la cavité résonnante et ainsi doubler la plage d'accord en longueur d'onde, ce qui permet par exemple de couvrir les deux bandes C et L (1525-1562 nm et 1570-1615 nm) dans un système de télécommunication du type WDM.

L'invention sera mieux comprise et d'autres détails, caractéristiques et avantages de celle-ci apparaîtront plus clairement à la lecture de la description qui suit, faite à titre d'exemple en référence aux dessins annexés dans lesquels :
- la figure 1 représente schématiquement la structure d'un filtre selon l'invention ;
- la figure 2 est une vue schématique de dessus d'un élément de ce filtre ;
- la figure 3 est une vue schématique en perspective d'une variante de réalisation ;
- la figure 4 représente schématiquement la structure générale d'une variante de réalisation du filtre selon l'invention ;
- la figure 5 est un graphe représentant les transmittances théorique et mesurée d'un filtre selon l'invention ;
- la figure 6 est un graphe représentant les variations de la longueur d'onde centrale et de la bande passante à -3dB du filtre selon l'invention en fonction de la tension électrique de commande.

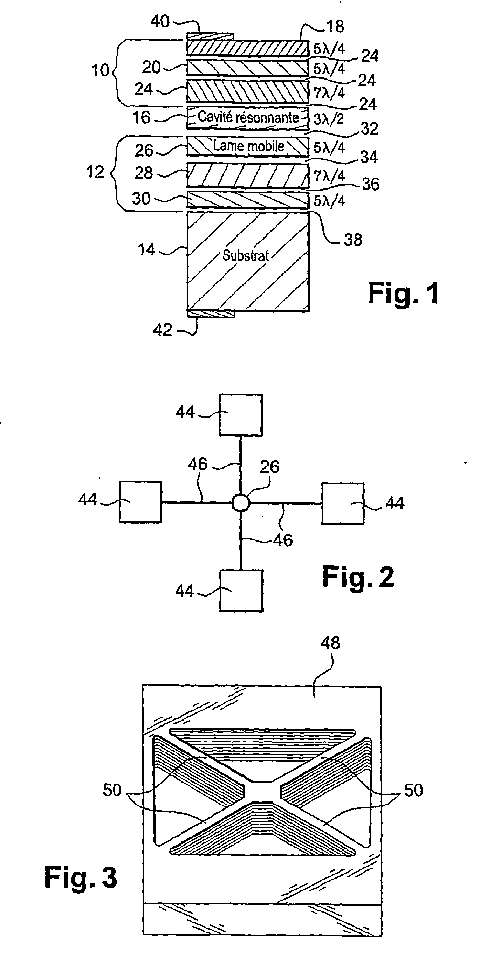

On se réfère d'abord à la figure 1 qui représente schématiquement la structure générale d'un filtre selon l'invention, comprenant essentiellement deux miroirs de Bragg 10 et 12 portés par un substrat 14 et entre lesquels est situé un disque 16 de matériau solide ayant un indice de réfraction élevé et qui constitue une cavité résonnante à la longueur d'onde considérée (ce disque ayant une épaisseur égale à k.λ/2, avec k égal à 3 dans l'exemple représenté).

Le miroir de Bragg supérieur 10 de la figure 1 comprend une alternance de couches de matériau semi-conducteur 18, 20, 22 formant des lames quart d'onde séparées les unes des autres et du disque résonnant 16 par des lames quart d'onde d'air 24 et le miroir de Bragg inférieur 12 est formé de couches 26, 28, 30 de matériau semi-conducteur qui sont des lames quart d'onde et qui sont séparées les unes des autres et du disque résonnant 16 par des lames quart d'onde d'air 32, 34, 36 et 38 respectivement.

Les différentes couches de matériau semi-conducteur des miroirs de Bragg sont fixes, c'est-à-dire non déplaçables ou non déformables, à l'exception d'une couche adjacente au disque 16, par exemple la couche 26 du miroir de Bragg inférieur 12, qui est mobile ou déformable axialement vers et à l'opposé du disque 16.

Les épaisseurs des différentes couches de matériau semi-conducteur formant les miroirs de Bragg sont indiquées en figure 1 et sont égales à (2k+1)λ/4, k étant ici égal à 2 ou 3 pour des raisons d'optimisation mécanique. Les lames d'air ont ici des épaisseurs égales à (2k+1)λ/4 avec k=0 à l'exception des lames 32 et 34 qui sont de part et d'autre de la lame mobile 26 du miroir de Bragg 12 et qui ont une épaisseur égale à 3 λ /4. Le déplacement de la lame mobile 26 dans un sens ou dans l'autre est commandé par application d'une tension électrique entre un contact supérieur 40 fixé par exemple sur le miroir de Bragg supérieur 10 et un contact inférieur 42 fixé par exemple sur le substrat 14 ou sur une lame semi-conductrice du miroir de Bragg inférieur 12, le sens de déplacement de la lame mobile 26 dépendant de la polarité de la tension électrique appliquée. Les différentes lames semi-conductrices des miroirs de Bragg 10 et 12 ont toutes un dopage de même type (par exemple n) à l'exception de la lame mobile 26 qui a un dopage du type opposé (par exemple p).

Le déplacement de la lame mobile 26 dans un sens ou dans l'autre modifie l'épaisseur de la lame d'air 32 qui se trouve entre cette lame mobile 26 et le disque résonnant, ce qui se traduit par une variation de la longueur d'onde centrale de transmission du filtre selon l'invention, parce que l'épaisseur effective de la cavité résonnante de ce filtre est supérieure à l'épaisseur du disque 16 en raison de la pénétration partielle de l'onde réfléchie dans le miroir de Bragg inférieur 12.

Le disque résonnant 16, grâce à sa structure solide et à son indice de réfraction élevé, constitue un guide d'onde entre les deux miroirs de Bragg 10 et 12 qui limite beaucoup les pertes par échappement latéral de l'onde électromagnétique résonnante.

Pour assurer une propagation quasi-monomode de cette onde dans le disque résonnant 16, le diamètre de ce disque est choisi relativement faible, par exemple de l'ordre de 10 µm.

La réduction des pertes latérales dans la cavité résonnante augmente la réflectivité des miroirs de Bragg et donc le nombre d'allers-retours de l'onde résonnante, ce qui se traduit par une meilleure sélectivité du filtre selon l'invention.

La lame mobile 26 est avantageusement à structure suspendue, par exemple comme représenté en figure 2.

Dans cet exemple, la lame mobile 26 se présente sous forme d'un disque à contour circulaire, d'un diamètre d'environ 10 µm, qui est relié à des plots d'ancrage 44 par quatre bras 46, s'étendant vers l'extérieur depuis le disque 26 à 90° les uns des autres, ces bras 46 étant élastiquement déformables en flexion.

Dans le mode de réalisation représenté schématiquement en figure 3, toutes les lames des filtres de Bragg 10 et 12 et le disque résonnant 16 comprennent des disques centraux d'un diamètre de l'ordre de 10 µm qui sont suspendus à un cadre fixe 48 de forme parallélépipédique rectangle par des bras 50 s'étendant en diagonale à l'intérieur du cadre 48, ces bras ayant une largeur d'environ 5 µm et une longueur de 50 à 70 µm.

La structure représentée en figure 3 est obtenue par une combinaison de gravure ionique profonde et de gravure chimique sélective.

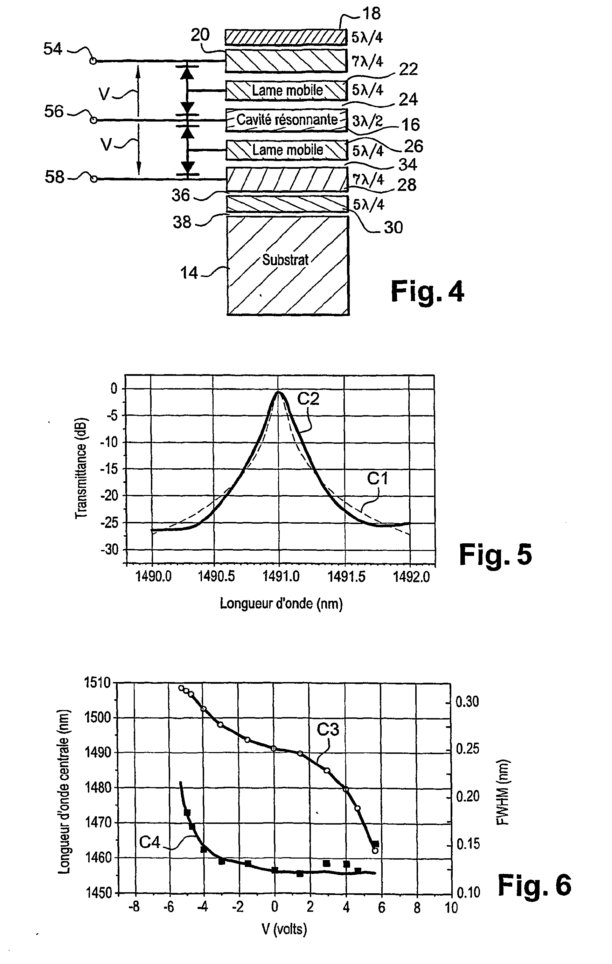

Dans le mode de réalisation du filtre représenté schématiquement en figure 4, les deux lames semi-conductrices 22 et 26 des miroirs de Bragg 10 et 12 qui sont situées de part et d'autre du disque résonnant 16, sont des lames mobiles et sont séparées du disque résonnant 16 par des lames d'air 24 et 34 respectivement dont l'épaisseur est égale à 3 λ/14.

Les lames semi-conductrices fixes 18, 20, 28, 30 des deux miroirs de Bragg et le disque 16 ont un dopage de type n, tandis que les lames mobiles 22 et 26 ont un dopage de type p. On réalise ainsi une structure de diodes 52 montées tête-bêche entre les lames semi-conductrices 20, 22 du premier miroir de Bragg 10, le disque résonnant 16 et les lames semi-conductrices 26, 28 du second miroir de Bragg 12. Des électrodes de commande 54, 56, 58 sont reliées par exemple à la couche semi-conductrice 20 du premier miroir de Bragg 10, au disque résonnant 16 et à la couche semi-conductrice 28 du second miroir de Bragg 12, pour l'application de deux tensions électrique V entre les électrodes 54 et 56 et entre les électrodes 56 et 58, ces deux tensions électriques étant identiques par rapport à l'électrode commune 56.

En fonction de la polarité de la tension V, les lames mobiles 22 et 26 s'écartent simultanément du disque résonnant 16 en augmentant la longueur d'onde de résonance ou se rapprochent simultanément du disque résonnant 16 en diminuant la longueur d'onde de résonance.

Cela,permet de doubler la plage d'accord en longueur d'onde du filtre selon l'invention.

Ce filtre peut être réalisé à partir de couches de matériau à bas indice de réfraction, par exemple de Si02, et de matériau à indice de réfraction élevé, par exemple de Ti02. Un filtre ayant la structure de la figure 1 peut correspondre alors à la formule optique suivante :

L(HL)^9 6H AAA (HL)^7H

où L désigne une couche λ/4 de Si02, H désigne une couche λ/4 de Ti02, A désigne une couche λ/4 d'air, L(HL)^9 désigne le miroir de Bragg supérieur 10 comprenant neuf lames différentes, 6H désigne le disque résonnant à indice de réfraction élevé ayant une épaisseur égale à 3 λ, et AAA (HL)^7H désigne le miroir de Bragg inférieur 12 avec sa lame d'air AAA d'épaisseur réglable.

Une telle structure présente une sélectivité de 0,1 nm pour une longueur d'onde centrale de 1550 nm. Sa plage d'accord est supérieure à 50 nm sans perte de sélectivité.

Un filtre selon l'invention ayant la structure représentée schématiquement en figure 4 répondrait alors à la formule optique suivante:

(HL)^7H AAA 6H AAA(HL)^7H.

Ce filtre a une sélectivité de l'ordre de 0,1 nm pour une longueur d'onde centrale de 1550 nm et sa plage d'accord dépasse 100 nm autour de la longueur d'onde centrale.

En variante, un filtre selon l'invention peut être formé de lames de phosphure d'indium (InP) ayant les épaisseurs indiquées en figure 4, agencées en alternance avec des lames d'air ayant des épaisseurs égales à λ/4 à l'exception de celles qui sont de part et d'autre du disque résonnant 16 et qui ont des épaisseurs égales à 3λ/4, le disque 16 étant également en phosphure d'indium. Dans cette réalisation, les différentes lames de phosphure d'indium sont séparées les unes des autres par des espaceurs ou entretoises en In Ga As.

La plage d'accord est supérieure à 100 nm et permet de couvrir les deux bandes C et L d'un système de télécommunication optique du type WDM.

La figure 5 est un graphe représentant la transmittance du filtre selon l'invention en fonction de la longueur d'onde, ce filtre ayant la structure représentée schématiquement en figure 1. La courbe C1 en traits pointillés est une courbe théorique et la courbe C2 en traits pleins est une courbe expérimentale relevé sur le filtre de la figure 1 dont les couches semi-conductrices et le disque 16 sont en phosphure d'indium (InP). On voit que les deux courbes C1 et C2 sont très proches l'une de l'autre et que la bande passante mesurée à -3dB est inférieure à 0,15 nm. Une réjection de -20dB est obtenue à ± 0,45 nm de la longueur d'onde centrale et la réjection maximale est meilleure que 25 dB.

Dans le graphe de la figure 6, la courbe C3 représente la variation de la longueur d'onde centrale du filtre de la figure 1 en fonction de la tension V entre les électrodes 40 et 42, et la courbe C4 représente la variation de la bande passante à -3dB ou FWHM (Full Width at Half Maximum) en fonction de la tension de commande V.

La courbe C3 montre que l'on obtient un accord en longueur d'onde sur une plage de 45 nm sans dégradation sensible de la sélectivité pour une tension de commande V comprise entre -6 et +6 Volts. Ces courbes C3 et C4 ont été tracées à partir de mesures expérimentales sur un filtre ayant la structure de la figure 1 et dont les miroirs de Bragg et le disque résonnant sont formés de couches de phosphure d'indium, comme déjà indiqué.

## Revendications

1. Filtre optoélectronique sélectif accordable en longueur d'onde, comprenant une cavité résonnante formée entre deux réflecteurs partiels (10, 12) constitués d'un empilement de couches transparentes aux longueurs d'onde utilisées, et des moyens d'application d'un champ électrique aux extrémités des réflecteurs (10, 12) pour l'accord du filtre en longueur d'onde, **caractérisé en ce que** la cavité résonnante comprend un disque (16) de matériau solide transparent auxdites longueurs d'onde et à indice de réfraction élevé formant un guide d'onde entre les réflecteurs (10, 12), **en ce qu'**au moins un des réflecteurs comprend une alternance de couches ou de lames en matériau semi-conducteur transparent auxdites longueurs d'onde et de couches d'air et comprend une couche mobile ou déformable (26) de matériau solide séparée du disque (16) de la cavité résonante par une lame d'air (32), et **en ce que** la couche mobile ou déformable du ou de chaque réflecteur a un dopage opposé à celui des autres couches en matériau semi-conducteur du réflecteur.

2. Filtre selon la revendication 1, **caractérisé en ce que** le disque (16) de matériau à indice élevé a un diamètre faible, par exemple de l'ordre de 10 µm, pour une propagation quasi-monomode de l'onde résonnante

3. Filtre selon la revendication 1 ou 2, **caractérisé en ce que** chaque réflecteur comprend une alternance de couches ou de lames de matériau solide transparent auxdites longueurs d'onde et de couches d'air, l'une (22) de ces couches de matériau solide formant une lame mobile ou déformable séparée par une couche d'air (24) du disque (16) de la cavité résonnante.

4. Filtre selon la revendication 3, **caractérisé en ce que** les dopages des deux couches mobiles (22, 26) sont du même type.

5. Filtre selon l'une des revendications précédentes, **caractérisé en ce que** la ou chaque couche mobile (22, 26) est une couche suspendue.

6. Filtre selon l'une des revendications précédentes, **caractérisé en ce que** la couche d'air (24, 32) séparant le disque (16) de la cavité résonnante d'une couche mobile (22, 26) a une épaisseur égale à (2k+1)λ/4.

7. Filtre selon l'une des revendications précédentes, **caractérisé en ce que** le disque (16) de la cavité résonnante a une épaisseur égale à k.λ/2.

8. Filtre selon l'une des revendications précédentes, **caractérisé en ce que** le disque (16) de la cavité résonnante est à contour circulaire.

9. Filtre selon l'une des revendications précédentes, **caractérisé en ce que** toutes les couches de matériau solide des deux réflecteurs partiels (10, 12) et le disque (16) de la cavité résonnante sont suspendus.

10. Filtre selon l'une des revendications précédentes, **caractérisé en ce que** ses moyens d'accord en longueur d'onde comprennent des électrodes (40, 42) reliées à des couches de matériau semi-conducteur situées de part et d'autre du disque (16) et de ladite couche mobile (26), et des moyens d'application d'une tension électrique de commande à ces électrodes.

11. Filtre selon l'une des revendications 1 à 10, **caractérisé en ce que** ses moyens d'accord en longueur d'onde comprennent une première électrode (54) reliée à une couche fixe de matériau semi-conducteur d'un des réflecteurs, une seconde électrode (56) reliée au disque (16) de la cavité résonnante et une troisième électrode (58) reliée à une couche fixe de matériau semi-conducteur de l'autre réflecteur, et des moyens d'application de tensions électriques identiques entre la seconde et la première électrode (56,54) et entre la seconde et la troisième électrode (58, 56).

## Claims

1. A wavelength tunable selective optoelectronic filter comprising a resonant cavity formed between two partial reflectors (10, 12), each constituted by a stack of layers that are transparent at the wavelength used, together with means for applying an electric field to the ends of the reflectors (10, 12) for the purpose of wavelength tuning the filter, the filter being **characterized in that** the resonant cavity comprises a disk (16) of solid material that is transparent at said wavelength and that has a high refractive index, forming a waveguide between the reflectors (10, 12), **in that** at least one of the reflectors comprises alternating layers of air and layers or plates of semiconductor material that is transparent to said wavelength, and comprises a moveable or deformable layer (26) of solid material that is separated from the disk (16) of the resonant cavity by an air plate (32), and **in that** the moveable or deformable layer of the or each reflector has doping opposite to that of the doping of the other layers of semiconductor material of the reflector.

2. A filter according to claim 1, **characterized in that** the disk (16) of high-index material has a small diameter, e.g. of the order of 10 µm, for quasi-monomode propagation of the resonant wave.

3. A filter according to claim 1 or 2, **characterized in that** each reflector comprises alternating layers of air and layers or plates of solid material transparent at said wavelengths, one of said layers (22) of solid material forming a movable or deformable plate that is separated from the disk (16) of the resonant cavity by a layer (24) of air.

4. A filter according to claim 3, **characterized in that** the doping of both moving layers (22, 26) is of the same type.

5. A filter according to any one of preceding claims, **characterized in that** the or each moving layer (22, 26) is a suspended layer.

6. A filter according to any one of preceding claims, **characterized in that** the layer (24, 32) of air separating the disk (16) of the resonant cavity from a moving layer (22, 26) has a thickness equal to (2k+1)λ/4.

7. A filter according to any preceding claim, **characterized in that** the disk (16) of the resonant cavity has a thickness equal to k.λ/2.

8. A filter according to any preceding claim, **characterized in that** the disk (16) of the resonant cavity is of circular outline.

9. A filter according to any preceding claim, **characterized in that** all of the layers of solid material of the two partial reflectors (10, 12), and the disk (16) of the resonant cavity, are suspended.

10. A filter according to any one of preceding claims, **characterized in that** the wavelength tuning means comprise electrodes (40, 42) connected to layers of semiconductor material situated on opposite sides of the disk (16) and said moving layer (26), together with means for applying a control voltage to said electrodes.

11. A filter according to any one of claims 1 to 10, **characterized in that** the wavelength tuning means comprise a first electrode (54) connected to a stationary layer of semiconductor material of one of the reflectors, an electrode (56) connected to the disk (16) of the resonant cavity, and a third electrode (58) connected to a stationary layer of semiconductor material of the other reflector, together with means for applying identical voltages between the second and third electrodes (56, 54), and between the second and third electrodes (58, 56).

## Patentansprüche

1. Wellenlängenabstimmbares selektives optoelektronisches Filter, aufweisend
einen Resonanzhohlraum, der zwischen zwei Partialreflektoren (10,12) gebildet ist, die aus einem Stapel von Schichten bestehen, die für die verwendeten Wellenlängen transparent sind, und
Einrichtungen zum Anlegen eines elektrischen Feldes an die Enden der Reflektoren (10,12) zur Wellenlängenabstimmung des Filters,
**dadurch gekennzeichnet, dass** der Resonanzhohlraum eine Scheibe (16) aus einem für die Wellenlängen transparenten Festkörpermaterial mit hohem Brechungsindex aufweist, die einen Wellenleiter zwischen den Reflektoren (10,12) bildet,
**dadurch**, dass mindestens einer der Reflektoren eine Wechselfolge aus Schichten oder Plättchen eines für die Wellenlängen transparenten Halbleitermaterials und Luftschichten aufweist und eine bewegliche oder verformbare Schicht (26) aus Festkörpermaterial aufweist, die mittels einer Luftschicht (32) von der Scheibe (16) des Resonanzhohlraums getrennt ist, und
**dadurch**, dass die bewegliche oder verformbare Schicht des oder jedes Reflektors eine Dotierung hat, die entgegengesetzt ist zu derjenigen der anderen Halbleitermaterialschichten des Reflektors.

2. Filter nach Anspruch 1, **dadurch gekennzeichnet, dass** für eine Quasimonomoden-Fortpflanzung der Resonanzwelle die Scheibe (16) eines Materials mit hohem Brechungsindex einen kleinen Durchmesser, beispielsweise in der Größenordnung von 10µm, hat.

3. Filter nach Anspruch 1 oder 2, **dadurch gekennzeichnet, dass** jeder Reflektor eine Wechselfolge aus Schichten oder Plättchen eines für die Wellenlängen transparenten Festkörpermaterials und Luftschichten aufweist, wobei eine (22) dieser Festkörpermaterialschichten ein bewegliches oder verformbares Plättchen bildet, das mittels einer Luftschicht (24) von der Scheibe (16) des Resonanzhohlraums getrennt ist.

4. Filter nach Anspruch 3, **dadurch gekennzeichnet, dass** die Dotierungen der zwei beweglichen Schichten (22,26) vom gleichen Typ sind.

5. Filter nach einem der vorstehenden Ansprüche, **dadurch gekennzeichnet, dass** die oder jede bewegliche Schicht (22,26) eine aufgehängte Schicht ist.

6. Filter nach einem der vorstehenden Ansprüche, **dadurch gekennzeichnet, dass** die Luftschicht (24,32), die die Scheibe (16) des Resonanzhohlraums von einer beweglichen Schicht (22,26) trennt, eine Dicke hat, die gleich (2k+1)λ/4 ist.

7. Filter nach einem der vorstehenden Ansprüche, **dadurch gekennzeichnet, dass** die Scheibe (16) des Resonanzhohlraums eine Dicke von k*λ/2 hat.

8. Filter nach einem der vorstehenden Ansprüche, **dadurch gekennzeichnet, dass** die Scheibe (16) des Resonanzhohlraums eine kreisförmige Kontur hat.

9. Filter nach einem der vorstehenden Ansprüche, **dadurch gekennzeichnet, dass** alle Festkörpermaterialschichten der zwei Partialreflektoren (10,12) und die Scheibe (16) des Resonanzhohlraums aufgehängt sind.

10. Filter nach einem der vorstehenden Ansprüche, **dadurch gekennzeichnet, dass** seine Einrichtungen zur Wellenlängenabstimmung aufweisen: Elektroden (40,42), die mit Halbleitermaterialschichten, die beiderseits der Scheibe (16) und der beweglichen Schicht (26) angeordnet sind, verbunden sind, und Einrichtungen zum Anlegen einer elektrischen Steuerspannung an diese Elektroden.

11. Filter nach einem der Ansprüche 1 bis 10, **dadurch gekennzeichnet, dass** seine Einrichtungen zur Wellenlängenabstimmung aufweisen: eine erste Elektrode (54), die mit einer festen Halbleitermaterialschicht eines der Reflektoren verbunden ist, eine zweite Elektrode (56), die mit der Scheibe (16) des Resonanzhohlraums verbunden ist, und eine dritte Elektrode (58), die mit einer festen Halbleitermaterialschicht des anderen Reflektors verbunden ist, und Einrichtungen zum Anlegen von identischen elektrischen Spannungen zwischen der zweiten und der ersten Elektrode (56,54) und zwischen der zweiten und der dritten Elektrode (58,56).
